# EUROPÄISCHE PATENTSCHRIFT

(11) **EP 3 834 611 B1**
(45) Veröffentlichungstag und Bekanntmachung des Hinweises auf die Patenterteilung: **01.05.2024**
(21) Anmeldenummer: 20205450.8
(22) Anmeldetag: 03.11.2020
(51) Int. Cl.: A01K 1/10, A01K 5/01

(54) **RAUFE MIT ERWEITERBAREM DACH**
RACK WITH EXPANDABLE ROOF
RÂTELIER POURVU DE TOIT EXTENSIBLE

(30) Priorität: 12.12.2019 DE 202019106937 U
(43) Veröffentlichungstag der Anmeldung: 16.06.2021
(73) Patentinhaber: PATURA KG, 63925 Laudenbach (DE)
(72) Erfinder: Allié, Bernd, 63925 Laudenbach (DE)
(74) Vertreter: Herrmann, Uwe

(56) Entgegenhaltungen:
- AU-A- 1 851 883
- FR-A1- 2 331 957
- FR-A1- 3 051 005

## Beschreibung

Die vorliegende Erfindung betrifft eine Raufe zur Fütterung von Tieren. Futterraufen zum Einsatz auf der Weide bzw. im Laufhof sind in der Pferde- und Rinderhaltung eine Standardlösung. In den Raufen wird den Tieren Raufutter in Form von Heu oder Silage zum Fressen angeboten. Für unterschiedliche Tierarten, Rassen oder Tiergrößen stehen unterschiedliche Raufen bzw. Fressgitter, welche das in der Raufe aufgenommene Futter von den Tieren trennen, zur Auswahl. Raufen gibt es in eckiger oder runder Form, mit oder ohne Dach bzw. Boden.

Bei herkömmlichen Raufen mit Dach bietet die Größe des Daches den Tieren meist nur einen eingeschränkten Schutz vor Witterung, insbesondere vor Regen. Dies rührt daher her, dass Raufen für den Transport, beispielsweise mittels einer Dreipunktanhängung am Traktor, gewisse Abmessungen nicht überschreiten dürfen. Im Ergebnis ist die Größe des Daches herkömmlicher Raufen meist nicht ausreichend, um den Tieren einen ausreichenden Witterungsschutz zu bieten, da die Transportabilität der Raufe priorisiert wird und somit das Dach der Raufe meist relativ klein ausgestaltet wird.

Seitens vieler Tierhalter besteht jedoch der Wunsch, den Tieren durch ein ausreichend großes Dach einen Schutz vor der Witterung, wie z.B. Niederschlägen und Sonneneinstrahlung zu bieten.

Eine mobile Raufe ist beispielsweise aus der FR3051005A1 bekannt. Weiterhin offenbart die AU1851883A1 eine faltbare Raufe. Weiteren Stand der Technik stellt die FR2331957A1 dar.

Der vorliegenden Erfindung liegt die Aufgabe zugrunde, die aus dem Stand der Technik bekannten Probleme abzumildern oder auch ganz zu beseitigen. Konkret liegt der vorliegenden Erfindung die Aufgabe zugrunde, eine Raufe zu schaffen, die einfach transportierbar ist und den Tieren dennoch einen guten Schutz vor Witterung bietet.

Diese Aufgabe wird durch eine Raufe mit den Merkmalen des Anspruchs 1 gelöst. Weitere vorteilhafte Weiterbildungen der Erfindung sind Gegenstand der Unteransprüche.

Eine erfindungsgemäße Raufe zur Fütterung von Tieren weist ein Grundgestell zur Aufnahme von Futter und ein darüber angeordnetes Dach auch, wobei das Dach mindestens einen beweglichen, vorzugsweise abklappbaren, Anteil aufweist, mittels dessen die Dachfläche erweiterbar ist.

Erfindungsgemäß weist das Dach der Raufe einen zentralen, fest verbauten Anteil auf und der mindestens eine bewegliche, abklappbare, Anteil an einer Außenkante des zentralen, fest verbauten Anteils beweglich, verschwenkbar, angeordnet ist.

Vorzugsweise weist der mindestens eine bewegliche, abklappbare Anteil des Daches ein flexibles Material auf, welches mittels an dem zentralen, festverbauten Anteil beweglich angeordneten Streben aufgespannt werden kann. Somit kann der zentrale Anteil des Daches durch ein zeltartiges Aufspannen des beweglichen Anteils erweitert werden.

Alternativ oder zusätzlich kann der mindestens eine bewegliche, abklappbare, Anteil des Daches mindestens eine Platte aufweisen, welche vorzugsweise aus Metall gefertigt ist. Alternativ kann auch ein anderer relativ starrer Werkstoff, wie z.B. Holz oder Kunststoff, verbaut sein.

Der zentrale Anteil des Daches ist vorzugsweise aus Metall, Holz oder Kunststoff oder einem anderen relativ starren Material gefertigt.

Weiterhin hat es sich in der Praxis als vorteilhaft herausgestellt, wenn das Dach der Raufe einen zentralen, fest verbauten Anteil aufweist und der bewegliche, abklappbare, Anteil des Daches eine Außenkante des zentralen, fest verbauten Anteils vollständig umläuft. Bei dieser Ausführungsform kann das Dach in alle Richtungen nach außen hin erweitert werden.

Alternativ kann aber auch vorgesehen sein, dass der bewegliche Anteil nur an einem Teilbereich der Außenkante des zentralen, fest verbauten Bereichs angeordnet ist. Das Dach kann dann nur in einem Teilbereich bzw. in einer bestimmten Richtung erweitert werden.

Erfindungsgemäß hat der zentrale, fest verbaute Anteil des Daches die Form einer Pyramide, vorzugsweise mit viereckiger Grundfläche.

Wenn der mindestens eine bewegliche, abklappbare, Anteil des Daches hochgeklappt ist, sodass die gesamte Dachfläche gegenüber der Dachfläche des zentralen, fest verbauten Anteils des Daches erweitert ist, wird durch den mindestens einen beweglichen, abklappbaren, Anteil des Daches und den zentralen, fest verbauten Anteils des Daches eine gleichmäßig ansteigende Dachfläche gebildet.

Dies begünstigt die Luftzirkulation unter dem Dach der Raufe. Zudem kann z.B. Regen und Schnee durch die gleichmäßige Steigung des Daches sicher abgeleitet werden.

Um die Luftzirkulation unter dem Dach weiter zu verbessern weist das Dach der Raufe erfindungsgemäß eine Entlüftungseinrichtung in Form eines Entlüftungsfirsts auf.

Erfindungsgemäß ist der Entlüftungsfirst konzentrisch mit dem zentralen, fest verbauten Anteils des Daches angeordnet.

In anderen Worten ausgedrückt, kann die Erfindung wie folgt beschrieben werden: Eine Raufe gemäß der vorliegenden Erfindung bietet somit auf allen Seiten abklappbare Dachverlängerungen. Die gesamte überdachte Fläche kann somit bei Bedarf auf ein Mehrfaches vergrößert werden.

Die Form des Grunddaches (zentralen Anteils des Daches) ist erfindungsgemäß als Pyramide ausgeführt mit einem zentralen Entlüftungsfirst in der Mitte. Hierdurch wird ein Kamineffekt erzeugt, der eine Luftzirkulation unter der gesamten Dachfläche ermöglicht. Es kann sich keine Hitze stauen. Durch den Kamineffekt wird immer eine Luftbewegung erzeugt, die von den Tieren als angenehm empfunden wird und zusätzlich lästige Fliegen fernhält.

An den vier Seiten des Grunddaches sind jeweils Dachverlängerungen angebracht, die für den Transport abklappbar sind. Dadurch sind die Transportabmessungen der Raufe kaum größer als die Grundmaße der Raufe selbst. Trotz der großen Dachfläche bleibt die Raufe somit für unterschiedliche Einsatzorte dennoch mobil. Ein Auf- oder Abklappen des Daches bzw. dessen beweglicher Anteile ist mit 2 Personen jederzeit möglich. Der Transport der Raufen ist ohne Probleme auch auf öffentlichen Straßen und Wegen erlaubt.

Bei aufgeklapptem bzw. erweitertem Dach entsteht eine gleichmäßig ansteigende, große Dachfläche, die einen Kamineffekt garantiert und dafür sorgt, dass Regen und Schnee sicher abgeleitet werden.

Auch bei aufgebautem Dach ist hierbei immer gewährleistet, dass alle vorgeschrieben Abmessungen (z.B. Mindesthöhen...) speziell für die Sicherheit von Pferden eingehalten werden. Ein zusätzliches Verletzungsrisiko für die Tiere entsteht nicht.

Die Raufe kann von allen Seiten auch mit dem Traktor befüllt werden, ohne dass Veränderungen am Dach erforderlich sind.

Durch das hohe Eigengewicht der Raufe in Verbindung mit dem zusätzlichen Gewicht der Dachverlängerung bietet die Raufe zudem eine hohe Standsicherheit auch bei hohen Windgeschwindigkeiten.

Eine erfindungsgemäße Raufe bietet somit einen optimalen Witterungsschutz für die Tiere und gleichzeitig wird die hohe Mobilität und Flexibilität einer Futterraufe voll und ganz erhalten.

Weitere Merkmale, Vorteile und Effekte der vorliegenden Erfindung ergeben sich aus der nachstehenden Beschreibung bevorzugter Ausführungsformen unter Bezugnahme auf die Figuren. Gleiche Bezugszeichen bezeichnen gleiche oder ähnliche Elemente. Hierbei zeigt:
Fig. 1 eine herkömmliche Raufe;
Fig. 2 eine erfindungsgemäße Raufe;
Fig. 3 eine Schnittansicht einer erfindungsgemäßen Raufe und
Fig. 4 eine Draufsicht einer erfindungsgemäßen Raufe.

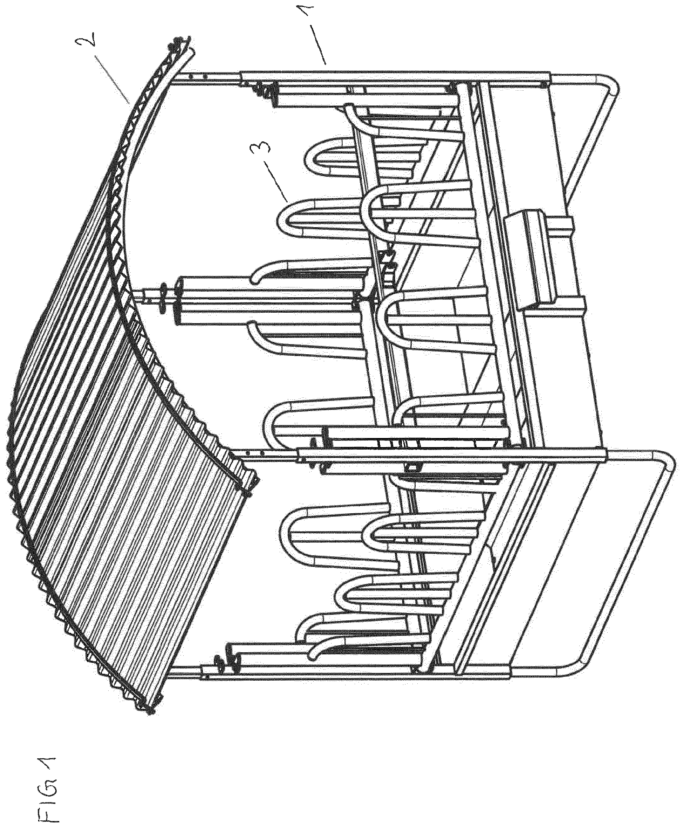

Die in Fig. 1 gezeigte herkömmliche Raufe weist ein Grundgestell 1 zur Aufnahme von Futter und ein darüber angeordnetes Dach 2 auf. Das Dach 2 besteht aus einem gebogenen Wellblechteil und der Umfang bzw. die Fläche des Daches ist nicht erweiterbar. Das Dach 2 weist keine beweglichen Anteile auf. Die Raufe weist auch Fressgitter 3 auf, welche das Futter in der Raufe halten und durch welche die Tiere das Futter fressen können.

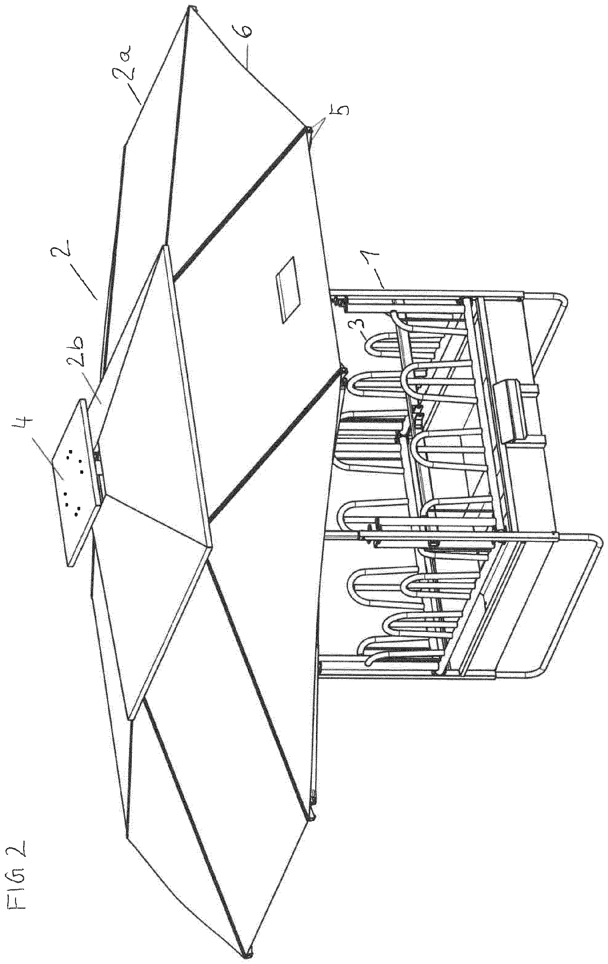

Die in Fig. 2 gezeigte erfindungsgemäße Raufe weist ebenfalls ein Grundgestell 1, ein Dach 2 und Fressgitter 3 auf. Das Dach 2 umfasst mindestens einen beweglichen, abklappbaren, Anteil 2a aufweist, mittels dessen die Dachfläche erweiterbar ist.

Weiterhin weist das Dach einen zentralen, fest verbauten Anteil 2b auf, der in dieser Ausführungsform nach Art einer Pyramide mit viereckiger Grundfläche ausgestaltet ist. Der zentrale Anteil 2b weist zudem einen Entlüftungsfirst 4 auf, welcher nach Art eines Flachdachs über dem zentralen Anteil 2b angeordnet ist.

Der bewegliche Anteil 2a des Daches 2 weist Streben 5 auf, mittels denen ein flexibles Material, beispielsweise ein Stoff 6 aufgespannt werden kann. Der bewegliche Anteil 2a umläuft die gesamte Außenkante des zentralen Anteils 2b, sodass das Dach in alle Richtungen erweiterbar ist.

Fig. 2 zeigt einer erfindungsgemäße Raufe mit erweitertem Dach, d.h. der bewegliche Anteil 2a ist aufgeklappt / aufgespannt. Soll die Raufe beispielsweise transportiert werden, kann der bewegliche Anteil 2a des Daches nach unten weggeklappt werden, sodass er beispielsweise an dem Grundgestell 1 anliegt.

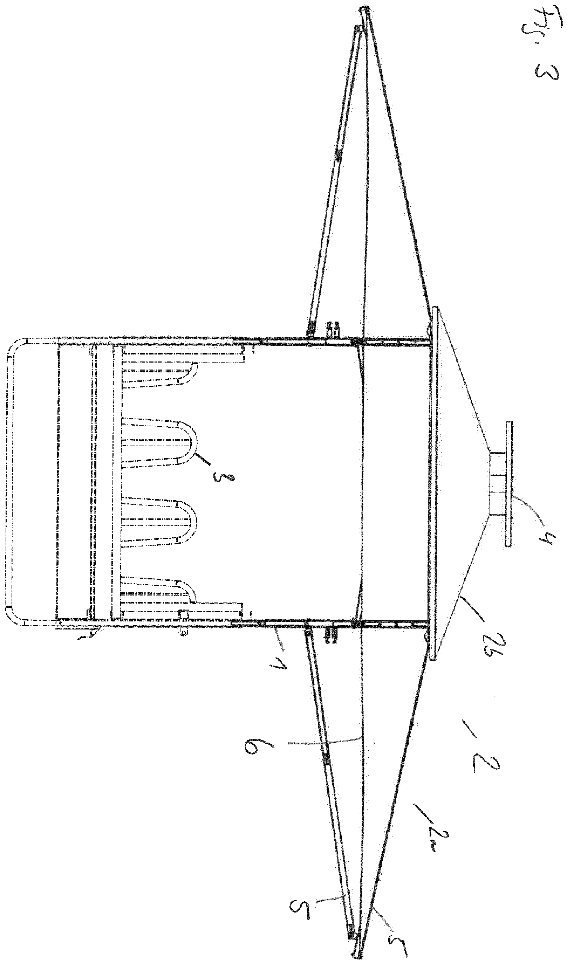

Fig. 3 zeigt eine Schnittansicht der Raufe aus Fig. 2. In dieser Darstellung sind die Streben 5 gut zu erkennen, mittels welcher der bewegliche Anteil 2a aufgespannt werden kann und von unten stabilisiert bzw. gestützt werden kann. Die Streben 5 sind an dem zentralen Anteil 2a des Dachs 2 oder an dem Grundgestell 1 befestigt.

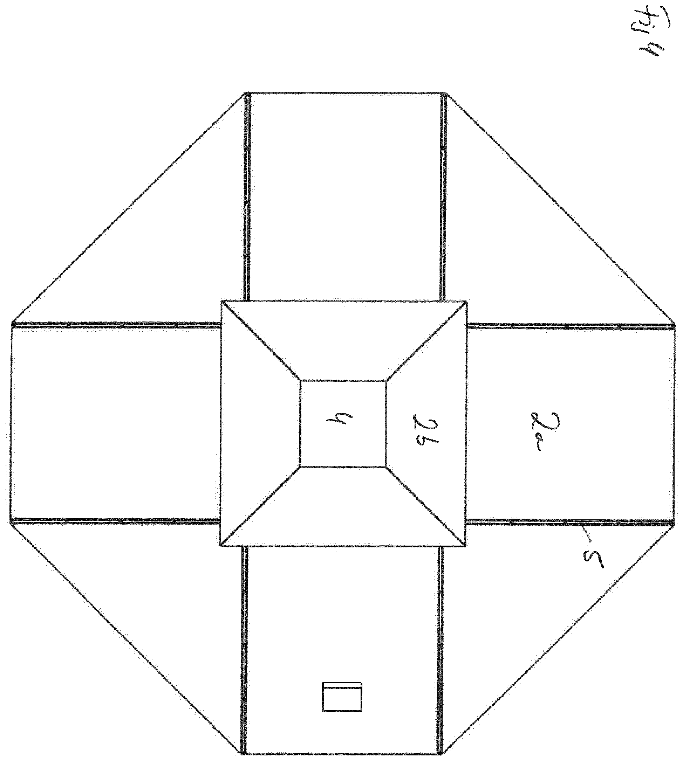

Fig. 4 zeigt eine Draufsicht einer erfindungsgemäßen Raufe mit erweitertem Dach. Der Entlüftungsfirst 4, der zentrale fest verbaute Anteil 2b des Daches 2 und der bewegliche Anteil 2a des Daches 2 sind konzentrisch angeordnet.

## Patentansprüche

1. Raufe zur Fütterung von Tieren, mit
einem Grundgestell (1) zur Aufnahme von Futter und einem darüber angeordneten Dach (2), wobei das Dach einen zentralen, fest verbauten Anteil (2b) und mindestens einen an einer Außenkante des zentralen, fest verbauten Anteils (2b) beweglichen, abklappbaren Anteil (2a) aufweist, mittels dessen die Dachfläche erweiterbar ist, **dadurch gekennzeichnet, dass** das Dach (2) eine Entlüftungseinrichtung in Form eines Entlüftungsfirstes (4) aufweist, welcher konzentrisch mit dem zentralen, fest verbauten Anteil (2b) des Daches (2) angeordnet ist, wobei der zentrale, fest verbaute Anteil (2b) des Daches (2) die Form einer Pyramide hat und, wenn der mindestens eine bewegliche, abklappbare, Anteil (2a) des Daches (2) hochgeklappt ist, sodass die gesamte Dachfläche gegenüber der Dachfläche des zentralen, fest verbauten Anteils (2b) des Daches (2) erweitert ist, durch den mindestens einen beweglichen, abklappbaren, Anteil (2a) des Daches und den zentralen, fest verbauten Anteil (2b) des Daches eine gleichmäßig ansteigende Dachfläche gebildet wird.

2. Raufe zur Fütterung von Tieren nach Anspruch 1, **dadurch gekennzeichnet, dass** der mindestens eine bewegliche, abklappbare, Anteil (2a) des Daches (2) ein flexibles Material aufweist, welches mittels an dem zentralen, fest verbauten Anteil (2b) beweglich angeordneten Streben (5) aufgespannt werden kann.

3. Raufe zur Fütterung von Tieren nach einem der vorhergehenden Ansprüche, **dadurch gekennzeichnet, dass** der mindestens eine bewegliche, abklappbare, Anteil (2a) des Daches (2) mindestens eine Platte aufweist, welche vorzugsweise aus Metall gefertigt ist.

4. Raufe zur Fütterung von Tieren nach einem der vorhergehenden Ansprüche, **dadurch gekennzeichnet, dass** das Dach (2) der Raufe einen zentralen, fest verbauten Anteil aufweist (2b) und der bewegliche, abklappbare, Anteil (2a) des Daches (2) eine Außenkante des zentralen, fest verbauten Anteils (2b) vollständig umläuft.

## Claims

1. Rack for feeding animals, comprising:
a base frame (1) for receiving fodder and a roof (2) arranged thereabove, wherein the roof has a central, fixedly-installed portion (2b) and at least one movable, inward-foldable portion (2a) on an outer edge of the central, fixedly-installed portion (2b) and by means of which the roof area can be extended,
**characterized in that**
the roof (2) comprises a venting device in the form of a venting ridge (4), which is arranged concentrically with the central, fixedly-installed portion (2b) of the roof (2), wherein the central, fixedly-installed portion (2b) of the roof (2) has the shape of a pyramid and, if the at least one movable, inward-foldable portion (2a) of the roof (2) is folded up so that the entire roof area is extended relative to the roof area of the central, fixedly-installed portion (2b) of the roof (2), is extended by the at least one movable, inward-foldable portion (2a) of the roof (2), a uniformly rising roof area is formed by the at least one movable, inward-foldable portion (2a) of the roof and the central, fixedly-installed portion (2b) of the roof.

2. Rack for feeding animals according to claim 1,
**characterized in that** the at least one movable, inward-foldable portion (2a) of the roof (2) has a flexible material which can be stretched by means of struts (5) arranged movably on the central, fixedly-installed portion (2b).

3. Rack for feeding animals according to any of the preceding claims,
**characterized in that** the at least one movable, inward-foldable portion (2a) of the roof (2) has at least one plate, which is preferably made of metal.

4. Rack for feeding animals according to any of the preceding claims,
**characterized in that** the roof (2) of the rack has a central, fixedly-installed portion (2b) and the movable, inward-foldable portion (2a) of the roof (2) completely surrounds an outer edge of the central, fixedly-installed portion (2b).

## Revendications

1. Râtelier pour l'alimentation d'animaux, avec un châssis de base (1) pour recevoir de la nourriture et un toit (2) agencé au-dessus, le toit présentant une partie centrale fixe (2b) et au moins une partie mobile rabattable (2a) sur un bord extérieur de la partie centrale fixe (2b), au moyen de laquelle la surface de toit peut être élargie,
**caractérisé en ce que**
le toit (2) présente un dispositif d'aération sous la forme d'un faîte d'aération (4), qui est agencé de manière concentrique à la partie centrale fixe (2b) du toit (2), la partie centrale fixe (2b) du toit (2) ayant la forme d'une pyramide et, lorsque l'au moins une partie mobile rabattable (2a) du toit (2) est relevée de telle sorte que la surface totale du toit est élargie par rapport à la surface du toit de la partie centrale fixe (2b) du toit (2), une surface de toit à pente régulière est formée par l'au moins une partie mobile rabattable (2a) du toit et la partie centrale fixe (2b) du toit.

2. Râtelier pour l'alimentation d'animaux selon la revendication 1, **caractérisé en ce que** l'au moins une partie mobile rabattable (2a) du toit (2) présente un matériau flexible qui peut être tendu au moyen d'entretoises (5) agencées de manière mobile sur la partie centrale fixe (2b).

3. Râtelier pour l'alimentation d'animaux selon l'une quelconque des revendications précédentes, **caractérisé en ce que** l'au moins une partie mobile rabattable (2a) du toit (2) présente au moins une plaque, qui est de préférence en métal.

4. Râtelier pour l'alimentation d'animaux selon l'une quelconque des revendications précédentes, **caractérisé en ce que** le toit (2) du râtelier présente une partie centrale fixe (2b) et la partie mobile rabattable (2a) du toit (2) fait entièrement le tour d'un bord extérieur de la partie centrale fixe (2b).
